(19)

**Europäisches Patentamt**
**European Patent Office**
**Office européen des brevets**

(11) **EP 1 924 475 B1**

(12) **EUROPÄISCHE PATENTSCHRIFT**

(45) Veröffentlichungstag und Bekanntmachung des Hinweises auf die Patenterteilung:
**14.07.2010 Patentblatt 2010/28**

(51) Int Cl.:
*B60W 10/08* (2006.01)    *B60W 20/00* (2006.01)
*B60W 30/18* (2006.01)

(21) Anmeldenummer: **06792711.1**

(22) Anmeldetag: **04.08.2006**

(86) Internationale Anmeldenummer:
**PCT/EP2006/065086**

(87) Internationale Veröffentlichungsnummer:
**WO 2007/025843 (08.03.2007 Gazette 2007/10)**

(54) **VERFAHREN ZUR BEGRENZUNG VON SOLLMOMENTEN BEI DER MOTORSTEUERUNG**

METHOD FOR DEFINING DESIRED TORQUE DURING MOTOR CONTROL

PROCEDE POUR LIMITER LES COUPLES CIBLES DANS LE CADRE DE LA COMMANDE DE MOTEURS

(84) Benannte Vertragsstaaten:
**DE FR GB IT**

(30) Priorität: **29.08.2005 DE 102005040778**

(43) Veröffentlichungstag der Anmeldung:
**28.05.2008 Patentblatt 2008/22**

(73) Patentinhaber: **ROBERT BOSCH GMBH**
**70442 Stuttgart (DE)**

(72) Erfinder:
• **KAEFER, Oliver**
**71711 Murr (DE)**

• **NIEMANN, Holger**
**71634 Ludwigsburg (DE)**
• **HAGMAN, Per**
**70469 Stuttgart (DE)**
• **SEEL, Andreas**
**71282 Hemmingen (DE)**

(56) Entgegenhaltungen:
**EP-A- 1 548 253       DE-A1- 10 038 181**
**DE-A1- 10 155 128     DE-A1-102004 013 581**
**US-A1- 2005 060 079**

**Beschreibung**

Die Erfindung betrifft ein Verfahren zum Betrieb eines Kraftfahrzeugantriebs, welches insbesondere geeignet ist, um Sollmomente bei fehlerhafter Umsetzung einer Momentenanforderung zu begrenzen. Derartige Verfahren werden insbesondere zur Steuerung von Kraftfahrzeugantrieben in Hybridfahrzeugen eingesetzt. Weiterhin betrifft die Erfindung ein Motorsteuerungsgerät mit Mitteln zur Durchführung des erfindungsgemäßen Verfahrens.

Stand der Technik

Im Stand der Technik (z. B. aus DE 103 20 017 A1) sind Steuereinrichtungen für eine Antriebseinheit bekannt, die die Antriebseinheit insbesondere hinsichtlich eines abgegebenen Antriebsmomentes steuern oder regeln, wobei die Antriebseinheit einer Brennkraftmaschine eines Kraftfahrzeugs ist. Das Kraftfahrzeug umfasst dabei üblicherweise eine durch den Fahrer des Kraftfahrzeugs betätigbare Fahrerwunsch-Aufnahmeeinrichtung, insbesondere ein fußbetätigbares Fahrpedal, die dafür vorgesehen ist, ein einen momentanen Betätigungszustand der Fahrerwunsch-Aufnahmeeinrichtung repräsentierendes Ausgangssignal abzugeben. Eine Steuereinheit empfängt das Ausgangssignal von der Fahrerwunschaufnahmeeinrichtung und ordnet dem empfangenen Ausgangssignal wenigstens eine Soll-Ausgangsgröße, insbesondere ein Soll-Antriebsmoment der Antriebseinheit zu. Die Antriebseinheit wird von der Steuereinheit derart angesteuert, dass sich eine von der Antriebseinheit abgegebene Ist-Ausgangsgröße der Soll-Ausgangsgröße annähert. Derartige Steuereinrichtungen sind in verschiedenen Auslegungen für übliche Kraftfahrzeugmotoren, insbesondere Ottomotoren und Dieselmotoren, bekannt, z. B. das Bosch-Motorsteuerungssystem mit elektronischem Gaspedal (EGAS).

Ferner ist es im Stand der Technik bekannt, eine kontinuierliche Momentenüberwachung zur Aufdeckung von Fehlfunktionen im Steuergerät durchzuführen. Dies dient insbesondere dem Schutz von Fahrinsassen in dem Kraftfahrzeug und externen Verkehrsteilnehmern. Es soll eine ungewollte Beschleunigung des Fahrzeugs verhindert werden. Der Kern der kontinuierlichen Momentenüberwachung ist der Vergleich eines vom Motor bereitgestellten Ist-Momentes mit einem zulässigen Moment. Im Normalfall ist das Ist-Moment kleiner als das zulässige Moment. Falls das Ist-Moment das zulässige Moment übersteigt, liegt ein Fehler im Motorsteuergerät vor und eine zu einem sicheren Fahrzeugzustand führende Fehlerreaktion wird eingeleitet. Die Überwachung der Motorsteuergeräte erfolgt üblicherweise nach einem 3-Ebenen-Überwachungskonzept. Die Motorsteuerung selbst, insbesondere die Vorgabe des Sollmomentes, erfolgt dabei in der als Funktionsebene bezeichneten ersten Ebene. Die zweite Ebene (Überwachungsebene) ist als die kontinuierliche Momentenüberwachung ausgeführt. In dieser Ebene wird unter anderem in Abhängigkeit von Fahrzeug- und Motorfunktionen ein zulässiges Moment ermittelt und mit einem Motor-Ist-Moment verglichen. Die Ebene 2 wird aufwändig abgesichert (Doppelablage aller Variablen, zyklische RAM- und ROM-Prüfung, Programmablaufkontrolle, Befehlstest). Ebene 3 dient zur Rechnerabsicherung.

DE 102 10 684 A1 bezieht sich auf ein Verfahren zur Überwachung eines Moments einer Antriebseinheit eines Fahrzeugs. Das zu überwachende Moment wird mit einem zulässigen Moment verglichen, das zulässige Moment wird dem zu überwachenden Moment nachgeregelt und es wird ein Fehler detektiert, wenn das zu überwachende Moment stärker als ein erster vorgegebener Wert vom zulässigen Moment abweicht, wobei der Fehler nur in dem Fall detektiert wird, in dem eine Stellung eines Bedienelementes, insbesondere einer Fahrpedalstellung, mindestens seit einer ersten vorgegebenen Zeit innerhalb eines vorgegebenen Toleranzbereiches liegt.

DE 197 39 565 A1 betrifft ein Verfahren zur Steuerung des Drehmomentes einer Antriebseinheit eines Kraftfahrzeuges, bei welchem das Drehmoment der Antriebseinheit wenigstens nach Maßgabe des Fahrerwunsches eingestellt wird, wobei das Ist-Drehmoment der Antriebseinheit bestimmt wird und wenigstens auf der Basis des Fahrerwunsches ein maximal zulässiges Drehmoment ermittelt wird. Es erfolgt eine Drehmomentenreduzierung und/oder Begrenzung bei Überschreiten des maximal zulässigen Momentes durch das Ist-Drehmoment. Dabei wird wenigstens ein Betriebszustand festgestellt, in dem das Drehmoment der Antriebseinheit durch zusätzliche Belastung erhöht ist. Während dieses wenigstens einen Betriebszustands wird das maximal zulässige Moment erhöht. Insbesondere wird dadurch beim Betrieb mit kalter Antriebseinheit und/oder beim Betrieb belastender Verbraucher das zulässige Moment erhöht.

DE 197 48 345 Al hat ein Verfahren zur Steuerung der Antriebseinheit eines Fahrzeugs zum Gegenstand, wobei das Drehmoment der Antriebseinheit abhängig von einem aus der Stellung eines vom Fahrer betätigbaren Bedienelementes abgeleiteten Fahrerwunschmoment und abhängig von wenigstens einem Sollmoment, welches von wenigstens einer externen Funktion vorgegeben wird, die anstelle oder zusätzlich zur Fahrervorgabe das Drehmoment beeinflusst. Ein maximal zulässiges Drehmoment wird vorgegeben und bei Überschreiten dieses maximal zulässigen Werts wird durch den entsprechenden Ist-Wert eine Reduzierung des Drehmomentes vorgenommen. Das maximal zulässige Moment wird wenigstens abhängig von der Stellung des Bedienelementes gebildet und das maximal zulässige Moment wird abhängig von dem Sollmoment der wenigstens einen externen Funktion gebildet, wenn dieses Sollmoment größer als das von der Bedienelementstellung abhängige zulässige Moment ist. Die externe Funktion kann z. B. das Drehmoment gegenüber dem Fahrerwunschmoment erhöhen, wie eine Motorschleppmomentregelung oder eine Fahrgeschwindigkeitsregelung.

Die US 2005/060 079 A zeigt die Merkmale des Oberbegriffes des Anspruchs 1.

Die beschriebenen, aus dem Stande der Technik bekannten Verfahren der Momentenüberwachung sind nicht ohne weiteres auf Hybridfahrzeuge übertragbar. In Hybridfahrzeugen kommt neben einem Verbrennungsmotor mindestens eine weitere Momentenquelle (Motor) zum Einsatz. In den meisten Fällen handelt es sich hierbei um einen Elektroantrieb.

Im Stand der Technik ist in einem Fahrzeug nur ein Motor vorhanden, der ein Motorsteuergerät enthält, das eine Vielzahl von Momentenanforderungsinformationen von extern (z. B. durch ein Bremssteuergerät oder einen Abstandshaltertempomat (ACC)) über einen Signalbus erhält. Das Motorsteuergerät prüft die Integrität der empfangenen externen Momentenanforderungssignale und plausibilisiert die Momentenanforderungsinformationen anhand von ihm zur Verfügung stehender Fahrzeug-Zustandssignale. Das Motorsteuergerät bestimmt dann anhand der externen Informationen und anderer Signale (u. a. dem Fahrerwunsch, der z. B. per Fahrpedal eingestellt wird) das von dem Motor anzufordernde.Moment (Sollmoment) und steuert den Motor entsprechend direkt an, ohne mit einem weiteren Steuergerät zu kommunizieren.

In der Motorsteuerung muss bei mehreren vorhandenen Motoren das vom Fahrer geforderte Wunschmoment, welches beispielsweise durch Bedienen eines Fahrpedals eingestellt wird, auf die vorhandene Momentenquelle (mindestens zwei Motoren) aufgeteilt werden. Dies geschieht in Abhängigkeit zahlreicher Umgebungsvariablen, u. a. mit dem Ziel, den verbrauchsgünstigsten Betriebspunkt für alle Momentenquellen einzustellen. Ein derartiges Verfahren ist beispielsweise in DE 102 02 531 A1 beschrieben. Die aufgeteilten Momente müssen dann von dem Motorsteuergerät gegebenenfalls an weitere, den einzelnen Motoren zugeordnete Steuergeräte übermittelt werden.

Vorteile der Erfindung

Es wird daher ein Verfahren zum Betrieb eines Kraftfahrzeugantriebs vorgeschlagen, welches die Nachteile der aus dem Stand der Technik bekannten Verfahren vermeidet. Insbesondere ermöglicht es das erfindungsgemäße Verfahren, Fehler in der Momentenaufteilung von Hybridfahrzeugen abzufangen und so die Verfügbarkeit des Gesamtsystems zu erhöhen.

Ein Grundgedanke der Erfindung besteht in der Begrenzung der Sollmomente der einzelnen Momentenquellen in Abhängigkeit eines Momentenvergleichs aus Soll- und Summenmoment. Diese Begrenzung findet in der Ebene 1 statt, so dass ein vorzeitiges Abschalten einzelner Momentenquellen verhindert wird. Anstelle eines vollständigen Abschaltens eines Motors kann auch eine prozentuale Begrenzung der Sollmomente durchgeführt werden.

Bei dem erfindungsgemäßen Verfahren weist der Kraftfahrzeugantrieb mindestens zwei einzelne Motoren bzw. Momentenquellen auf. Beispielsweise kann es sich dabei, wie oben beschrieben, um einen Verbrennungsmotor und einen Elektromotor handeln. In einem ersten Schritt des Verfahrens wird mindestens ein Gesamtsollmoment berechnet. Dieses Gesamtsollmoment wird anschließend in einem zweiten Schritt in mindestens zwei Einzelsollmomente, entsprechend der Anzahl der einzelnen Motoren bzw. Momentenquellen, aufgeteilt. Analog zum oben beschriebenen Verfahren gemäß dem Stand der Technik wird dann in einem ersten Einzelmomentvergleichsschritt die Summe der mindestens zwei Einzelsollmomente mit dem Gesamtsollmoment verglichen. Nunmehr wird allerdings bei Feststellen einer Abweichung der Summe der mindestens zwei Einzelsollmomente vom Gesamtsollmoment um mehr als einen vorgegebenen Toleranzwert ein Begrenzungsschritt eingeleitet. In diesem Begrenzungsschritt werden die mindestens zwei Einzelsollmomente mit jeweils einem Begrenzungsfaktor multipliziert, vorzugsweise einem Begrenzungsfaktor kleiner als Eins. Dadurch werden mindestens zwei begrenzte Einzelsollmomente generiert.

Der vorgegebene Toleranzwert kann beispielsweise eine vorgegebene Toleranzschwelle sein, welche beispielsweise in einer Fahrzeugsteuerung eingestellt ist. Der Toleranzwert kann jedoch auch auf Null gesetzt werden, so dass bei jeder Abweichung der Summe der mindestens zwei Einzelmomente vom Gesamtsollmoment der Begrenzungsschritt durchgeführt wird. Alternativ kann dieser Begrenzungsschritt lediglich dann durchgeführt werden, wenn die Summe der mindestens zwei Einzelsollmomente das Gesamtsollmoment überschreitet. Somit können auch für ein Überschreiten und ein Unterschreiten unterschiedliche Toleranzwerte vorgegeben werden.

Im Gegensatz zum aus dem Stand der Technik bekannten Verfahren wird nunmehr nicht automatisch in einen EMB-Betrieb umgeschaltet, sobald eine Abweichung und somit ein Fehler detektiert wird. Der Begrenzungsschritt ermöglicht vielmehr eine gestufte bzw. angepasste Reaktion auf Abweichungen, so dass beispielsweise zunächst mit kleinen Begrenzungsfaktoren versucht werden kann, den Fehler auszugleichen. Der Fahrer des Kraftfahrzeugs spürt in der Regel diesen Begrenzungsvorgang nicht, so dass die Begrenzung zumindest anfänglich mit keinerlei Komforteinbußen für den Fahrer verbunden ist. Alternativ oder zusätzlich kann der Fahrer auch über ein Display von der Durchführung eines Begrenzungsschritts informiert werden, beispielsweise wenn die erforderlichen Begrenzungsfaktoren bestimmte vorgegebene Werte unterschreiten. Dann kann beispielsweise der Fahrer des Kraftfahrzeugs aufgefordert werden, mit seinem Kraftfahrzeug eine Werkstatt aufzusuchen.

Das erfindungsgemäße Verfahren kann auf verschiedene Weisen vorteilhaft weitergebildet werden. Eine Weiterbildung besteht beispielsweise darin, das erfindungsgemäße Verfahren mit dem oben beschriebenen, aus dem Stand der Technik bekannten Verfahren der Momentenanforderung zur Generierung des Gesamtsollmoments zu kombinieren. Dazu wird das Gesamtsollmoment in einem Momentenanforderungsschritt generiert, bei welchem zunächst ein Sollmoment berechnet und anschließend mit einem zulässigen Moment verglichen wird. Bei der Momentenanforderung wird dann als Gesamtsollmoment das kleinere dieser beiden Momente (berechnetes Sollmoment und zulässiges Moment) verwendet.

Alternativ oder zusätzlich können auch weitere Korrekturschritte bzw. Überwachungsschritte durchgeführt werden. So kann das oben beschriebene Verfahren beispielsweise dahingehend weitergebildet werden, dass die mindestens zwei begrenzten Einzelsollmomente in mindestens einem zweiten Einzelsollmoment-Vergleichsschritt mit den mindestens zwei Einzelsollmomenten verglichen werden. Dieser Vergleich dient dazu, Fehler im Begrenzungsschritt zu detektieren. Wird eine Abweichung zwischen Einzelsollmomenten und jeweils zugehörigen begrenzten Einzelsollmomenten festgestellt, beispielsweise wiederum um mehr als einen vorgegebenen Toleranzwert (welcher wiederum auch gleich 0 sein kann oder verschiedene Toleranzwerte aufweisen kann), so wird ein Fehler detektiert. Dann werden jeweils korrigierte Einzelsollmomente generiert. Beispielsweise können diese korrigierten Einzelsollmomente wiederum der jeweils kleinere der beiden Einzelsollmomente, nämlich Einzelsollmoment und zugehöriges begrenztes Einzelsollmoment, sein.

Wie oben beschrieben, ermöglicht der Begrenzungsschritt eine angepasste Reaktion auf auftretende Abweichungen und somit auf Fehler in der Momentenaufteilung. Um zu gewährleisten, dass auch bei einer Begrenzung die Summe der Einzelsollmomente dem gewünschten Sollmoment entspricht, ist es von Vorteil, die Begrenzungsfaktoren im Begrenzungsschritt für alle Einzelsollmomente gleich zu wählen. Insbesondere kann der Begrenzungsfaktor gerade dem Verhältnis zwischen Gesamtsollmoment und Summe der mindestens zwei Einzelsollmomente entsprechen. Auf diese Weise wird der auftretende Fehler zumindest theoretisch optimal korrigiert.

Weiterhin können auch nachfolgende Fehler durch einen Vergleich zwischen den Einzelsollmomenten bzw. begrenzten Einzelsollmomenten und entsprechenden Ist-Momenten detektiert und korrigiert werden. Zu diesem Zweck kann das erfindungsgemäße Verfahren dahingehend weitergebildet werden, dass anschließend, d. h. nach Generierung der Einzelsollmomente oder (im Fehlerfall) der begrenzten bzw. korrigierten Einzelsollmomente (im Folgenden nur Einzelsollmomente genannt), diese mindestens zwei Einzelsollmomente in einem Umsetzungsschritt in mindestens zwei Ansteuergrößen zur Ansteuerung der mindestens zwei Motoren bzw. Momentenquellen umgewandelt werden. Über eine geeignete Elektronik werden diese Ansteuergrößen an zugehörige Momentensteller der Motoren weitergeleitet. Um diese Umwandlung zu überwachen, können wiederum von den mindestens zwei Motoren mindestens zwei Ist-Momente, welche die tatsächlich in den Motoren eingestellten Momente repräsentieren, zurückgekoppelt und für eine Überwachung genutzt werden. Beispielsweise können diese Ist-Momente durch eine Messung eines Zylinderinnendrucks, beispielsweise eines Zylinderinnendrucks im Brennraum einer Dieselkraftmaschine, ermittelt werden. Alternativ oder zusätzlich können auch Oszillationen eines Drehzahlsignals einer Kurbelwelle ausgenutzt werden. Weiterhin lassen sich auch die Ansteuergrößen selbst in entsprechende Ist-Momente zurückrechnen. Bei Elektromotoren bietet sich auch eine Umrechnung von Strom, Spannung und Drehzahl des Elektromotors in Ist-Momente zur Überwachung an. Weiterhin kann auch eine Rückmeldung über ein BUS-System folgen und/oder es kann eine Überwachung durch mindestens einen Momentensensor auf einer Kurbelwelle oder Getriebeeingangsstufe zur Generierung eines Ist-Moments eingesetzt werden.

Dann kann ein Vergleich zwischen den mindestens zwei Ist-Momenten und den mindestens zwei Einzelsollmomenten durchgeführt werden. Weichen Ist-Momente und zugehörige Einzelsollmomente um mehr als eine vorgegebene Schwelle voneinander ab, so kann Einfluss auf die jeweils zugehörige Ansteuergröße oder auf alle Ansteuergrößen genommen werden. Dabei wird die jeweils zugehörige Ansteuergröße oder alle Ansteuergrößen durch mindestens eine Ersatzansteuergröße ersetzt.

Der Vergleich zwischen Ist-Momenten und Einzelsollmomenten wird häufig dadurch erschwert, dass die Umsetzung von Einzelsollmomenten in entsprechende Ansteuergrößen und anschließend in entsprechende Momente im Motor mit einer Zeitverzögerung verbunden ist. Dementsprechend kann es sinnvoll sein, die mindestens zwei Ist-Momente und/oder die mindestens zwei Einzelsollmomente vor Durchführung des Vergleichs zu filtern und/oder mittels eines Totzeitgliedes zeitlich zu verzögern.

Zeichnung

Anhand der Zeichnung wird die Erfindung nachstehend näher erläutert.
Es zeigt:

Figur 1    ein dem Stand der Technik entsprechendes Verfahren zur Überwachung einer Momentenanforderung;

Figur 2    ein aus dem Stand der Technik bekanntes Verfahren zur Überwachung der Momentenaufteilung zur Steuerung eines Hybridantriebs; und

Figur 3 ein bevorzugtes Ausführungsbeispiel eines erfindungsgemäßen Verfahrens zur Ansteuerung eines Hybridantriebs.

Ausführungsbeispiele

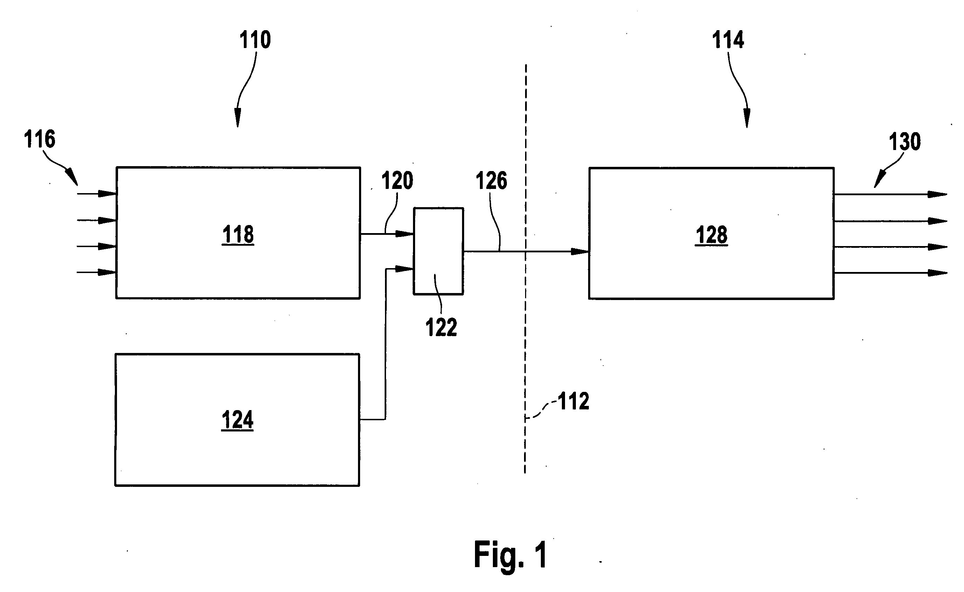

In Figur 1 ist ein dem Stand der Technik entsprechendes Verfahren dargestellt, bei welchem mittels einer so genannten Momentenbegrenzung in der Berechnungsebene (Ebene 1, Bezugsziffer 110 in Figur 1) fehlerhaft zu hohe Momente erkannt werden.

Das Verfahren ist in zwei aufeinanderfolgende Verfahrensschritte eingeteilt, welche hier symbolisch durch die Trennlinie 112 getrennt sind. Die Trennlinie 112 trennt die Ebene 1 (Berechnungsebene, Bezugsziffer 110) von der Ebene 2 (Umsetzungsebene, Bezugsziffer 114). In der Berechnungsebene 110 werden zunächst aus verschiedenen Eingangsgrößen 116 in einem Berechnungsschritt 118 Sollmomente 120 berechnet. Beispielsweise können die Eingangsgrößen 116 elektronische Informationen eines Fahrpedals enthalten, über welche der Wunsch eines Fahrers bezüglich eines bestimmten Drehmoments an ein Motorsteuergerät übermittelt wird Im Berechnungsschritt 118 werden diese Eingangsgrößen 116 in entsprechende Sollmomente 120 umgewandelt. Beispielsweise kann diese Umwandlung in Schritt 118 kontinuierlich oder in vorgegebenen Zeitintervallen erfolgen. Die Umwandlung in Schritt 118 kann beispielsweise unter Zuhilfenahme von Kennlinienfeldern, Funktionen oder elektronischen Tabellen erfolgen.

Die auf diese Weise in Schritt 118 generierten Sollmomente 120 werden in einem ersten Vergleichsschritt 122 mit zulässigen Momenten 124 verglichen. Wird dabei festgestellt, dass die berechneten Sollmomente 120 diese zulässigen Momente 124 überschreiten, so werden die Sollmomente 120 durch Fehlersollmomente ersetzt. Beispielsweise kann es sich bei diesen Fehlersollmomenten um die zulässigen Momente 124 handeln. Die auf diese Weise im ersten Vergleichsschritt 122 generierten korrigierten Sollmomente 126 überschreiten somit nicht die zulässigen Momente 124.

Mittels dieser korrigierten Sollmomente 126 wird dann in Ebene 2 (Bezugsziffer 114) ein Umsetzungsschritt 128 durchgeführt. In diesem Umsetzungsschritt werden die korrigierten Sollmomente 126 in Ansteuergrößen 130 umgewandelt. Bei diesen Ansteuergrößen 130 kann es sich beispielsweise um elektronische Signale handeln, welche an Momentensteller eines Kraftfahrzeugantriebs (in Figur 1 nicht dargestellt) übermittelt werden. Die Ansteuergrößen 130 stellen somit bei einem fehlerfreien Betrieb des Umsetzungsschritts 128 das "Hardware-Analogon" zu den korrigierten Sollmomenten 126 dar.

Das in Figur 1 dargestellte, dem Stand der Technik entsprechende Verfahren kann beispielsweise in einem herkömmlichen Motorsteuergerät untergebracht sein. Beispielsweise kann dieses Motorsteuerungsgerät einen Mikrocomputer und andere elektronische Bauelemente aufweisen. Das Motorsteuerungsgerät muss nicht notwendigerweise in einer elektronischen Einheit integriert sein, sondern kann beispielsweise auch dezentralisiert im Kraftfahrzeug untergebracht sein. Vorteilhafterweise werden die in Ebene 1 (Bezugsziffer 110) ausgeführten Verfahrensschritte ganz oder teilweise als Computerprogramm ausgestaltet, wobei das Computerprogramm beispielsweise die Eingangsgrößen 116 im Berechnungsschritt 118 in die Sollmomente 120 umrechnet. Auch der erste Vergleichsschritt 122 kann durch ein Computerprogramm realisiert werden. Alternativ oder zusätzlich kann dieser erste Vergleichsschritt 122 jedoch auch durch eine entsprechende elektronische Schaltung realisiert werden, beispielsweise eine elektronische Vergleichsschaltung, mittels derer die Sollmomente 120 mit den zulässigen Momenten 124 verglichen werden und jeweils das Minimum dieser beiden Werte 120, 124 als korrigiertes Sollmoment 126 weitergeleitet wird.

Analog kann auch der in Ebene 2 (Bezugsziffer 114) dargestellte Umsetzungsschritt 128 ganz oder teilweise in einem Motorsteuerungsgerät realisiert werden. Insbesondere kann dieser Verfahrensschritt 128 wiederum ganz oder teilweise in einem Mikrocomputer des Motorsteuerungsgeräts umgesetzt werden. Bei diesem Mikrocomputer kann es sich um denselben Mikrocomputer handeln, welcher auch in Ebene 1 (Bezugsziffer 110) eingesetzt wird, oder es kann sich um einen separaten Mikrocomputer handeln. Weiterhin können alternativ oder zusätzlich auch elektronische Bauelemente eingesetzt werden. Beispielsweise können zur Generierung der Ansteuergrößen 130 entsprechende elektronische Wandler, Filter, Endstufen oder ähnliches eingesetzt werden, so dass geeignete Ansteuergrößen 130 für Momentensteller des Kraftfahrzeugantriebs generiert werden. Diese Ansteuergrößen 130 können über ein entsprechendes Leitungssystem, beispielsweise geeignete Schnittstellenkabel (BUS-System) an den bzw. die Momentensteller des Kraftfahrzeugs übermittelt werden.

Wie oben beschrieben, leidet das in Figur 1 dargestellte, dem Stand der Technik entsprechende Verfahren unter dem Mangel, dass zwar Fehler in der Berechnungsebene 110, also Fehler, welche im Berechnungsschritt 118 bei der Berechnung der Sollmomente 120 auftreten, detektiert und ausgeglichen werden. Eine Kontrolle der Umsetzung dieser Sollmomente 120 bzw. der korrigierten Sollmomente 126 im Umsetzungsschritt 128 in entsprechende Ansteuergrößen 130 erfolgt jedoch nicht.

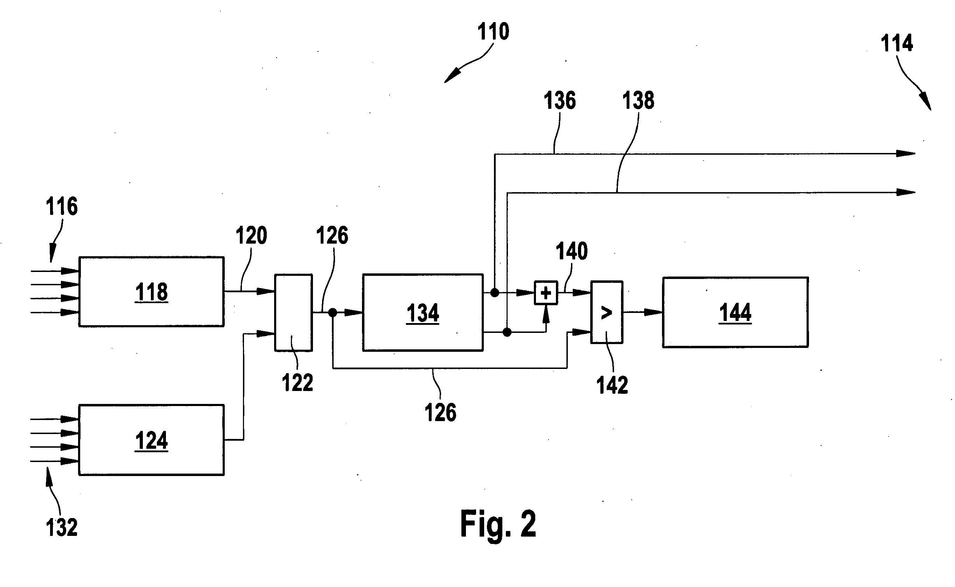

In Figur 2 ist ein dem Stand der Technik entsprechendes Verfahren dargestellt, bei welchem das Verfahren gemäß Figur 1 für die Steuerung eines Hybridantriebs erweitert wurde. Dabei wird zunächst wiederum in der Berechnungsebene 110 zunächst aus den Eingangsgrößen 116 analog zu Figur 1 ein Sollmoment 120 berechnet. Im Vergleichsschritt 122 wird anschließend wiederum das Sollmoment 120 mit einem zulässigen Moment 124 verglichen, welches beispielsweise aus Betriebsbedingungen (in Figur 2 symbolisch dargestellt durch Bezugsziffer 132) berechnet werden kann. In diesem Vergleichsschritt 122 wird aus dem Sollmoment 120 und dem zulässigen Moment 124 ein korrigiertes Sollmoment 126 ermittelt, welches beispielsweise wiederum der kleinere dieser beiden Werte 120, 124 sein kann. Auf diese Weise ist wiederum sichergestellt, dass das korrigierte Sollmoment 126 das zulässige Moment 124 nicht überschreitet. Das korrigierte Sollmoment 126 wird nun, um den Betrieb eines Hybridantriebs zu ermöglichen, an eine Momentenaufteilung 134 weitergeleitet. Bei dieser Momentenaufteilung 134 wird das korrigierte Sollmoment 126 in zwei Einzelsollmomente 136, 138 aufgeteilt. Diese Aufteilung in der Momentenaufteilung 134 in ein Einzelsollmoment 136 eines Verbrennungsmotors und ein Einzelsollmoment 138 eines Elektromotors kann insbesondere so erfolgen, dass, entsprechend den Eingangsgrößen 116 und den Betriebsbedingungen 132, eine optimale Energieeinsparung gewährleistet ist. Die Einzelsollmomente 136, 138 werden an die Umsetzungsebene 114 (in Figur 2 nur angedeutet) weitergeleitet, um dort in entsprechende Ansteuergrößen umgewandelt zu werden.

Zur Überwachung der Momentenaufteilung 134 ist in dem dem Stand der Technik entsprechenden Verfahren gemäß Figur 2 ein Vergleich des Summenmoments 140, welches die Summe der Einzelsollmomente 136, 138 ist, mit dem korrigierten Sollmoment 126 vorgesehen. Dieser Vergleich wird in einem Vergleichsschritt 142 durchgeführt. Wird dabei festgestellt, dass das Summenmoment 140 größer ist als das korrigierte Gesamtsollmoment 126, so wird ein Fehler in der Momentenaufteilung 134 detektiert und in einen Ersatzbetrieb 144 umgeschaltet. Bei diesem Ersatzbetrieb 144 können die Einzelsollmomente 136, 138 beispielsweise durch entsprechende Ersatzgrößen ersetzt werden. Grundsätzlich wird im Ersatzbetrieb 144 gemäß dem Stand der Technik zunächst der Elektromotor in einen generatorischen Betrieb versetzt und bei bleibender Abweichung schließlich der Verbrennungsmotor in den bereits beschriebenen EMB-Betrieb geschaltet. Eine Unterscheidung zwischen durch den Elektromotor bedingten Abweichungen und durch den Verbrennungsmotor bedingten Abweichungen ist bei diesem dem Stand der Technik entsprechenden Verfahren jedoch nicht möglich.

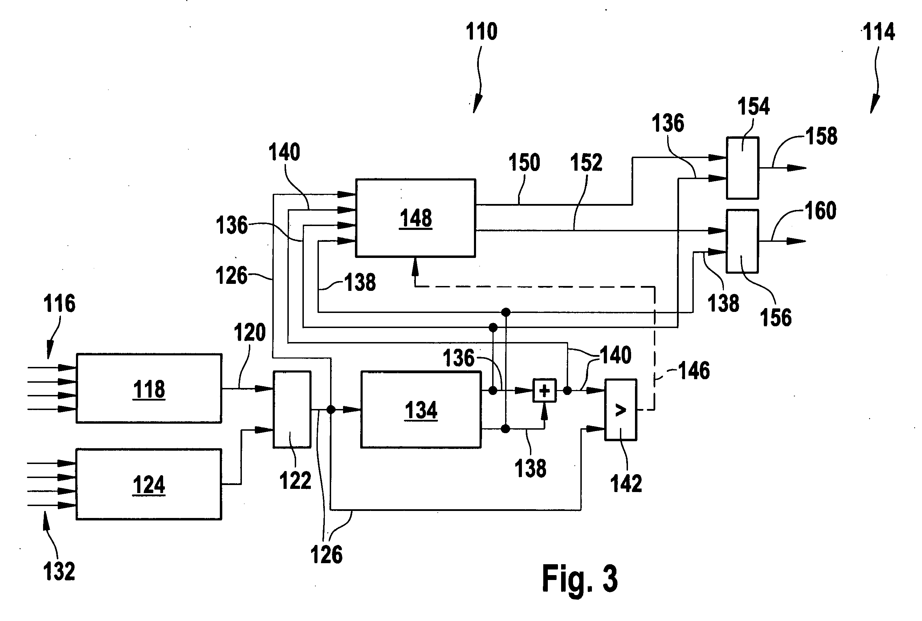

Im Gegensatz dazu ist in Figur 3 ein erfindungsgemäßes Verfahren dargestellt, welches diese Nachteile des Verfahrens gemäß Figur 3 nicht aufweist und dementsprechend besser auf die Besonderheiten eines Hybridantriebs angepasst ist.

Wiederum erfolgt in der bevorzugten Ausgestaltung des erfindungsgemäßen Verfahrens gemäß Figur 3 zunächst eine Berechnung von Sollmomenten 120 aus Eingangsgrößen 116 in einem Berechnungsschritt 118, gefolgt von einem Vergleich (Schritt 122) mit zulässigen Momenten 124, welche wiederum aus Betriebsbedingungen 132 bestimmt werden. Im Vergleichsschritt 122 wird ein korrigiertes Gesamtsollmoment 126 erzeugt, welches beispielsweise wiederum der jeweils kleinere der Werte 120, 124 ist. Analog zu Figur 2 wird dieses korrigierte Gesamtsollmoment 126 in einem Schritt der Momentaufteilung 134 in zwei Einzelsollmomente 136, 138 umgewandelt. Wiederum wird aus diesen Einzelsollmomenten 136, 138 ein Summenmoment 140 gebildet, welches zur Kontrolle wiederum in Schritt 142 mit dem korrigierten Gesamtsollmoment 126 verglichen wird.

Im Unterschied zum Verfahren gemäß Figur 2 erfolgt jedoch bei Feststellen einer Abweichung der Momente 140, 126 im Vergleichsschritt 142 kein bedingungsloses Umschalten auf einen Ersatzbetrieb 144. Stattdessen wird (gestrichelte Linie 146 in Figur 3) bei Feststellung einer Abweichung im Vergleichsschritt 142 ein Begrenzungsschritt 148 eingeleitet.

Dieser Begrenzungsschritt 148 verwendet als Eingangsgrößen die Einzelsollmomente 136, 138 sowie das korrigierte Gesamtsollmoment 126 und das Summenmoment 140. Anstelle des oben beschriebenen, dem Stand der Technik entsprechenden Ersatzbetriebes 144, bei dem üblicherweise mindestens eines der beiden Einzelsollmomente 136, 138 vollständig auf 0 gesetzt wird, erfolgt in dem Begrenzungsschritt 148 eine Begrenzung der Einzelsollmomente 136, 138 durch Herunterskalierung mit einem Begrenzungsfaktor. Dadurch werden aus den Einzelsollmomenten 136, 138 begrenzte Einzelsollmomente 150, 152 generiert. Bei diesem Ausführungsbeispiel wird ein für den Verbrennungsmotor und den Elektromotor identischer Begrenzungsfaktor eingesetzt, welcher sich aus dem Verhältnis von korrigiertem Gesamtsollmoment zum Summenmoment 140 berechnet. Dementsprechend ergibt sich für das begrenzte Einzelsollmoment 150 des Verbrennungsmotors:

$$M_{Eng,begr} = M_{Eng,Soll} \; x \; \frac{M_{soll}}{M_{Summe}} \; .$$

Dabei bezeichnet $M_{Eng,begr}$ das begrenzte Einzelsollmoment 150 des Verbrennungsmotors, $M_{Eng,soll}$ das Einzelsollmoment 136 des Verbrennungsmotors, $M_{soll}$ das korrigierte Gesamtsollmoment 126 und $M_{summe}$ das Summenmoment 140.

Entsprechend berechnet sich das begrenzte Einzelsollmoment 152 des Elektromotors zu:

$$M_{Elm,begr} = M_{Elm,Soll} \; x \; \frac{M_{soll}}{M_{Summe}} \; .$$

Dabei bezeichnet $M_{Elm,begr}$ das begrenzte Einzelsollmoment 152 des Elektromotors und $M_{Elm,soll}$ das Einzelsollmoment 138 des Elektromotors.

Diese bevorzugte Durchführung des Begrenzungsschritts 148 gewährleistet, dass die Einzelsollmomente 136, 138 entsprechend der Überschreitung des korrigierten Gesamtsollmoments 126 durch das Summenmoment 140 herunterskaliert werden. Dadurch lassen sich insbesondere kleinere Abweichungen zunächst ausgleichen, ohne dass auf einen Ersatzbetrieb mit gravierenden Änderungen des Betriebszustandes, insbesondere einer Abschaltung von einzelnen Motoren des Hybridantriebs, zurückgegriffen werden muss.

Diese begrenzten Einzelsollmomente 150, 152 könnten nun unmittelbar von der Berechnungsebene 110 an die Umsetzungsebene 114 übergeben werden. Die besonders bevorzugte Ausgestaltung im Verfahren gemäß Figur 3 berücksichtigt jedoch zusätzlich, dass auch beim Begrenzungsschritt 148 Fehler auftreten könnten, so dass durch diese Fehler die begrenzten Einzelsollmomente 150, 152 zu hoch sein könnten. Um dieses Risiko weiter zu verringern, sind dem Begrenzungsschritt 148 in Figur 3 zwei zusätzliche Vergleichsschritte 154, 156 nachgeschaltet. In diesen zusätzlichen Vergleichsschritten 154, 156 werden die begrenzten Einzelsollmomente 150, 152 nochmals mit den Einzelsollmomenten 136, 138, die von der Momentenaufteilung 134 generiert wurden, verglichen. Der Vergleich kann analog zum Vergleichsschritt 122 erfolgen. Insbesondere kann bei diesen Vergleichen 154, 156 als Ausgangsgröße jeweils der kleinere Wert der beiden Eingangsgrößen generiert werden. Wiederum können dabei Toleranzwerte bzw. Toleranzschwellen verwendet werden, so dass eine geringfügige Abweichung toleriert werden kann. Diese Toleranzwerte können wiederum auch auf 0 gesetzt sein.

Auf diese Weise generiert der Vergleich 154 der Einzelsollmomente 150, 136 des Verbrennungsmotors ein korrigiertes Einzelsollmoment 158 des Verbrennungsmotors. Analog generiert der Vergleich 156 der Einzelsollmomente 152, 138 des Elektromotors ein korrigiertes Einzelsollmoment 160 des Elektromotors. Diese korrigierten Einzelsollmomente 158, 160 werden nun an die Umsetzungsebene 114 weitergeleitet, um dort in entsprechende Ansteuergrößen umgewandelt zu werden.

Zusätzlich zu den beschrieben Kontrollmechanismen, welche eine Ansteuerung der Motoren mit zu hohen Sollmomenten verhindern sollen, können auch noch weitere Kontrollmechanismen vorgesehen sein. So können beispielsweise Ist-Momente der Motoren gemessen werden und zurück in die Motorsteuerung gekoppelt werden. Beispielsweise können Ist-Momente für den Verbrennungsmotor und Ist-Momente für den Elektromotor gemessen werden, beispielsweise mittels entsprechender Momentensensoren auf zugehörigen Wellen. Diese Ist-Momente können dann mit den mit den zugehörigen korrigierten Einzelsollmomenten 158, 160 verglichen werden (ggf. unter Zuhilfenahme von Totzeitgliedern und Filtern, z. B. um Umsetzungsverzögerungen auszugleichen) und bei Abweichungen entsprechende Fehlermaßnahmen eingeleitet werden. Auf diese Weise lässt sich die Erfindung vorteilhaft weiterbilden und die Fehlerwahrscheinlichkeit zusätzlich veringern.

Bezugszeichenliste

110    Ebene 1, Berechnungsebene
112    Trennlinie
114    Ebene 2, Umsetzungsebene
116    Eingangsgrößen
118    Berechnungsschritt
120    Sollmomente
122    erster Vergleichsschritt
124    zulässige Momente
126    korrigierte Sollmomente
128    Umsetzungsschritt
130    Ansteuergrößen
132    Betriebsbedingungen
134    Momentenaufteilung
136    Einzelsollmoment Verbren- nungsmotor
138    Einzelsollmoment Elektromo- tor
140    Summenmoment
142    Vergleich
144    Ersatzbetrieb
146    Einleitung des Begrenzungs- schritts
148    Begrenzungsschritt
150    begrenztes Einzelsollmoment Verbrennungsmotor
152    begrenztes Einzelsollmoment Elektromotor
154    Vergleich
156    Vergleich
158    korrigiertes Einzelsollmoment Verbrennungsmotor
160    korrigiertes Einzelsollmoment Elektromotor

**Patentansprüche**

1.  Verfahren zum Steuern eines Kraftfahrzeugantriebs, wobei der Kraftfahrzeugantrieb mindestens zwei einzelne Motoren aufweist, wobei in einem ersten Schritt mindestens ein Gesamtsollmoment (126) berechnet wird und wobei in einem zweiten Schritt das mindestens eine Gesaintsollmoment (126) in mindestens zwei Einzelsollmomente (136, 138) der mindestens zwei einzelnen Motoren aufgeteilt wird, wobei in einem ersten Einzelmomentvergleichsschritt (142) die Summe der mindestens zwei Einzelsollmomente (136, 138) mit dem Gesamtsollmoment (126) verglichen wird, **dadurch gekennzeichnet, dass** bei einer Abweichung um mehr als einen vorgegebenen Toleranzwert im Einzelmomentvergleichsschritt (142) ein Begrenzungsschritt (148) eingeleitet wird, wobei in dem Begrenzungsschritt (148) die mindestens zwei Einzelsollmomente (136, 138) mit jeweils einem Begrenzungsfaktor multipliziert werden, um mindestens zwei begrenzte Einzelsollmomente (150, 152) zu generieren.

**2.** Verfahren gemäß dem vorhergehenden Anspruch, **dadurch gekennzeichnet, dass** das Gesamtsollmoment (126) in einem Momentenanforderungsschritt ermittelt wird, bei welchem ein berechnetes Sollmoment (120) mit einem zulässigen Moment (124) verglichen wird und das Gesamtsollmoment (126) gleich dem kleineren Moment der aus dem berechneten Sollmoment (120) und dem zulässigen Moment (124) bestehenden Gruppe gesetzt wird.

**3.** Verfahren gemäß einem der vorhergehenden Ansprüche, **dadurch gekennzeichnet, dass** die mindestens zwei begrenzten Einzelsollmomente (150, 152) in mindestens einem zweiten Einzelsollmomentvergleichsschritt (154, 156) mit den mindestens zwei Einzelsollmomenten (136, 138) verglichen werden, wobei bei Abweichung der Einzelsollmomente (136, 138) von den jeweiligen begrenzten Einzelsollmomenten (150, 152) um mehr als einen vorgegebenen Toleranzwert jeweils korrigierte Einzelsollmomente (158, 160) generiert werden.

**4.** Verfahren gemäß dem vorhergehenden Anspruch, **dadurch gekennzeichnet, dass** die korrigierten Einzelsollmomente (158, 160) jeweils der kleinere Wert der aus einem Einzelsollmoment (136, 138) und einem zugehörigen begrenzten Einzelsollmoment (150, 152) bestehenden Gruppe sind.

**5.** Verfahren gemäß einem der vorhergehenden Ansprüche, **dadurch gekennzeichnet, dass** im Begrenzungsschritt (148) die Begrenzungsfaktoren für alle Einzelsollmomente (136, 138) gleich sind.

**6.** Verfahren gemäß dem vorhergehenden Anspruch, **dadurch gekennzeichnet, dass** der Begrenzungsfaktor das Verhältnis zwischen dem Gesamtsollmoment (126) und der Summe (140) der mindestens zwei Einzelsollmomente (136, 138) ist.

**7.** Verfahren gemäß einem der vorhergehenden Ansprüche, **dadurch gekennzeichnet, dass** die Einzelsollmomente (136, 138) oder die begrenzten Einzelsollmomente (150, 152) oder die korrigierten Einzelsollmomente (158, 160) in einem nachfolgenden Umsetzungsschritt in mindestens zwei Ansteuergrößen zur Ansteuerung der mindestens zwei Motoren umgewandelt werden.

**8.** Verfahren gemäß dem vorhergehenden Anspruch, **dadurch gekennzeichnet, dass** mindestens zwei Ist-Momente der mindestens zwei Motoren ermittelt werden, wobei ein Vergleich zwischen den mindestens zwei Ist-Momenten und den mindestens zwei Einzelsollmomenten (136, 138) oder den begrenzten Einzelsollmomenten (150, 152) oder den korrigierten Einzelsollmomenten (158, 160) durchgeführt wird, wobei bei einer eine vorgegebene Schwelle überschreitenden Abweichung zwischen Ist-Momenten und zugehörigen Einzelsollmomenten (136, 138) bzw. begrenzten Einzelsollmomenten (150, 152) bzw. korrigierten Einzelsollmomenten (158, 160) die jeweils zugehörige mindestens eine Ansteuergröße durch mindestens eine Ersatzansteuergröße ersetzt wird.

**9.** Verfahren gemäß dem vorhergehenden Anspruch, **dadurch gekennzeichnet, dass** die mindestens zwei Ist-Momente durch mindestens eines der folgenden Verfahren ermittelt werden: eine Messung eines Zylinderinnendrucks; einer Oszillation eines Drehzahlsignals einer Kurbelwelle; einer Umrechnung der mindestens einen Ansteuergröße; einer Umrechnung von Strom, Spannung und Drehzahl eines Elektromotors; durch Rückmeldung über ein BUS-System; durch mindestens einen Momentensensor auf einer Kurbel- oder Nockenwelle.

**10.** Verfahren gemäß einem der beiden vorhergehenden Ansprüche, **dadurch gekennzeichnet, dass** die mindestens zwei Ist-Momente und/oder die mindestens zwei Einzelsollmomente (136, 138) bzw. begrenzten Einzelsollmomente (150, 152) bzw. korrigierten Einzelsollmomente (158, 160) vor Durchführung des Vergleichs gefiltert und/oder mittels eines Totzeitgliedes zeitverzögert werden.

**11.** Motorsteuerungsgerät mit Mitteln zur Durchführung eines Verfahrens gemäß einem der vorhergehenden Verfahrensansprüche.

**Claims**

**1.** Method for controlling a motor vehicle drive, the motor vehicle drive having at least two individual motors, in a first step at least one overall desired torque (126) being calculated, and in a second step the at least one overall desired torque (126) being divided into at least two individual desired torques (136, 138) of the at least two individual motors, in a first individual torque comparison step (142) the sum of the at least two individual desired torques (136, 138) being compared with the overall desired torque (126), **characterized in that**, in the event of a deviation by more than a predetermined tolerance value in the individual torque comparison step (142), a limitation step (148) is initiated, in the limitation step (148) the at least two individual desired torques (136, 138) being multiplied in each case by a limitation factor, in order to generate at least two limited individual desired torques (150, 152).

**2.** Method according to the preceding claim, **characterized in that** the overall desired torque (126) is determined in a torque requirement step in which a calculated desired torque (120) is compared with a permissible torque (124) and the overall desired torque (126) is set equal to the lower torque of the group consisting of the calculated desired torque (120) and of the permissible torque (124).

3. Method according to one of the preceding claims, **characterized in that** the at least two limited individual desired torques (150, 152) are compared with the at least two individual desired torques (136, 138) in at least one second individual desired torque comparison step (154, 156), in each case corrected individual desired torques (158, 160) being generated in the event of a deviation of the individual desired torques (136, 138) from the respective limited individual desired torques (150, 152) by more than a predetermined tolerance value.

4. Method according to the preceding claim, **characterized in that** the corrected individual desired torques (158, 160) are in each case the lower value of the group consisting of an individual desired torque (136, 138) and of an associated limited individual desired torque (150, 152).

5. Method according to one of the preceding claims, **characterized in that**, in the limitation step (148), the limitation factors are identical for all the individual desired torques (136, 138).

6. Method according to the preceding claim, **characterized in that** the limitation factor is the ratio between the overall desired torque (126) and the sum (140) of the at least two individual desired torques (136, 138).

7. Method according to one of the preceding claims, **characterized in that** the individual desired torques (136, 138) or the limited individual desired torques (150, 152) or the corrected individual desired torques (158, 160) are converted in a subsequent conversion step into at least two activation variables for activating the at least two motors.

8. Method according to the preceding claim, **characterized in that** at least two actual torques of the at least two motors are determined, a comparison between the at least two actual torques and the at least two individual desired torques (136, 138) or the limited individual desired torque (150, 152) or the corrected individual desired torques (158, 160) being carried out, and, in the event of a deviation, overshooting a predetermined threshold, between actual torques and associated individual desired torques (136, 138) or limited individual desired torques (150, 152) or corrected individual desired torques (158, 160), the at least one activation variable associated in each case is replaced by at least one replacement activation variable.

9. Method according to the preceding claim, **characterized in that** the at least two actual torques are determined by means of at least one of the following methods: a measurement of a cylinder internal pressure; an oscillation of a rotational-speed signal of a crankshaft; a conversion of the at least one activation variable; a conversion of current, voltage and rotational speed of an electric motor; by feedback via a BUS system; by means of at least one torque sensor on a crankshaft or camshaft.

10. Method according to one of the two preceding claim, **characterized in that** the at least two actual torques and/or the at least two individual desired torques (136, 138) or limited individual desired torques (150, 152) or corrected individual desired torques (158, 160) are filtered and/or time-delayed by means of a dead-time element before the comparison is carried out.

11. Engine control apparatus with means for carrying out a method according to one of the preceding method claims.

### Revendications

1. Procédé pour commander un entraînement d'un véhicule automobile, dans lequel l'entraînement du véhicule automobile présente au moins deux moteurs individuels, au moins un couple de consigne total (126) étant calculé dans une première étape et l'au moins un couple de consigne total (126) étant divisé dans une deuxième étape en au moins deux couples de consigne individuels (136, 138) des au moins deux moteurs individuels, la somme des au moins deux couples de consigne individuels (136, 138) étant comparée dans une première étape de comparaison des couples individuels (142) avec le couple de consigne total (126), **caractérisé en ce que** dans le cas d'un écart de plus d'une valeur de tolérance prédéfinie dans l'étape de comparaison des couples individuels (142), une étape de limitation (148) est lancée, dans l'étape de limitation (148), les au moins deux couples de consigne individuels (136, 138) étant multipliés par un facteur de limitation respectif, afin de générer au moins deux couples de consigne individuels limités (150, 152).

2. Procédé selon la revendication précédente, **caractérisé en ce que** le couple de consigne total (126) est déterminé dans une étape de demande de couple, dans laquelle un couple de consigne calculé (120) est comparé avec un couple admissible (124) et le couple de consigne total (126) est posé comme égal au plus petit couple du groupe constitué par le couple de consigne calculé (120) et le couple admissible (124).

3. Procédé selon l'une quelconque des revendications précédentes, **caractérisé en ce que** les au moins deux couples de consigne individuels limités (150, 152) sont comparés dans au moins une deuxième étape de comparaison de couples de consigne individuels (154, 156) avec les au moins deux couples de consigne individuels (136, 138), et en cas d'écart entre les couples de consigne individuels (136, 138) et les couples de consigne individuels limités respectifs (150, 152), des couples de consigne individuels corrigés à chaque fois de plus d'une valeur de tolérance prédéfinie (158, 160) étant générés.

4. Procédé selon la revendication précédente, **caractérisé en ce que** les couples de consigne individuels corrigés (158, 160) sont à chaque fois la plus petite valeur du groupe constitué d'un couple de consigne individuel (136, 138) et d'un couple de consigne individuel limité associé (150, 152).

5. Procédé selon l'une quelconque des revendications précédentes, **caractérisé en ce que** dans l'étape de limitation (148), les facteurs de limitation sont égaux pour tous les couples de consigne individuels (136, 138).

6. Procédé selon la revendication précédente, **caractérisé en ce que** le facteur de limitation est le rapport entre le couple de consigne total (126) et la somme (140) des au moins deux couples de consigne individuels (136, 138).

7. Procédé selon l'une quelconque des revendications précédentes, **caractérisé en ce que** les couples de consigne individuels (136, 138) ou les couples de consigne individuels limités (150, 152) ou les couples de consigne individuels corrigés (158, 160) sont convertis dans une étape de conversion subséquente en au moins deux valeurs de commande pour commander les au moins deux moteurs.

8. Procédé selon la revendication précédente, **caractérisé en ce qu'**au moins deux couples instantanés des au moins deux moteurs sont déterminés, une comparaison entre les au moins deux couples instantanés et les au moins deux couples de consigne individuels (136, 138) ou les couples de consigne individuels limités (150, 152) ou les couples de consigne individuels corrigés (158, 160) étant effectuée, et dans le cas d'un écart dépassant un seuil prédéfini entre les couples instantanés et les couples de consigne individuels associés (136, 138), ou les couples de consigne individuels limités (150, 152) ou les couples de consigne individuels corrigés (158, 160), l'au moins une valeur de commande associée étant remplacée par au moins une valeur de commande de remplacement.

9. Procédé selon la revendication précédente, **caractérisé en ce que** les au moins deux couples instantanés sont déterminés par au moins l'un des procédés suivants : une mesure d'une pression interne à un cylindre ; une oscillation d'un signal de régime d'un vilebrequin ; une conversion de l'au moins une valeur de commande ; une conversion du courant, de la tension, et du régime d'un moteur électrique ; par une information en retour par le biais d'un système de bus ; par au moins un capteur de couple sur un vilebrequin ou un arbre à cames.

10. Procédé selon l'une quelconque des deux revendications précédentes, **caractérisé en ce que** les au moins deux couples instantanés et/ou les au moins deux couples de consigne individuels (136, 138) ou les couples de consigne individuels limités (150, 152) ou les couples de consigne individuels corrigés (158, 160) sont filtrés avant d'effectuer la comparaison et/ou sont retardés dans le temps au moyen d'un organe de temps mort.

11. Appareil de commande d'un moteur comprenant des moyens pour mettre en oeuvre un procédé selon l'une quelconque des revendications précédentes de procédé.

**Fig. 1**

Fig. 2

Fig. 3

EP 1 924 475 B1

**EP 1 924 475 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10320017 A1
- DE 10210684 A1
- DE 19739565 A1
- DE 19748345 A1
- US 2005060079 A
- DE 10202531 A1